# EUROPEAN PATENT SPECIFICATION

(11) **EP 0 552 825 B1**
(45) Date of publication and mention of the grant of the patent: **08.04.1998**
(21) Application number: 93106301.0
(22) Date of filing: 28.01.1988
(51) Int. Cl.: G02B 26/10, B41J 2/45, G02B 5/08

(54) **Rotational scanning member**
Rotierendes Abtastelement
Membre de balayage rotatif

(30) Priority: 30.01.1987 JP 19915/87; 28.04.1987 JP 107002/87; 30.06.1987 JP 101356/87 U
(43) Date of publication of application: 28.07.1993
(62) Divisional of application: 88101263.7
(73) Proprietor: CANON KABUSHIKI KAISHA, Tokyo (JP)
(72) Inventor: Sugiura, Yoshinori, Kawasaki-shi, Kanagawa-ken (JP)
(74) Representative: Tiedtke, Harro, Dipl.-Ing.

(56) References cited:
- DE-A- 3 047 813
- GB-A- 847 267
- US-A- 3 818 444

## Description

The present invention relates to a rotational scanning member usable with a bar code reader in which a bar code is scanned by a light beam, usable with a laser beam printer or usable with a laser beam aligner or the like, and more particularly to a laser beam printer using a beam deflector.

It is conventional that a laser beam is scanningly deflected by rotating a mirror. As for the mirrors for this purpose, there are a flat mirror which reciprocates, such as a galvano mirror and a rotational polygonal mirror.

The flat mirror type is not suitable for a high speed rotation because the moment required for the rotation is greatly different, and because a moment of inertia is low, with the result that the balance thereof is not satisfactory. Therefore, a rotational polygonal mirror which is rotated at a constant speed in one direction is widely used because it has a thick side which is formed into mirror surfaces so that the moment of inertia is sufficiently large, and in addition, the moment is substantially balanced. This type of rotational polygonal mirror can be rotated at a high speed, and therefore, is suitable for a practical scanning optical system.

Although the rotational polygonal mirror has the above described advantages, it still involves the following drawbacks.

If the reflecting surface of the rotational polygon mirror is inclined with respect to the direction of the incident beam (tilting), it is required to provide an expensive tilt correction optical system.

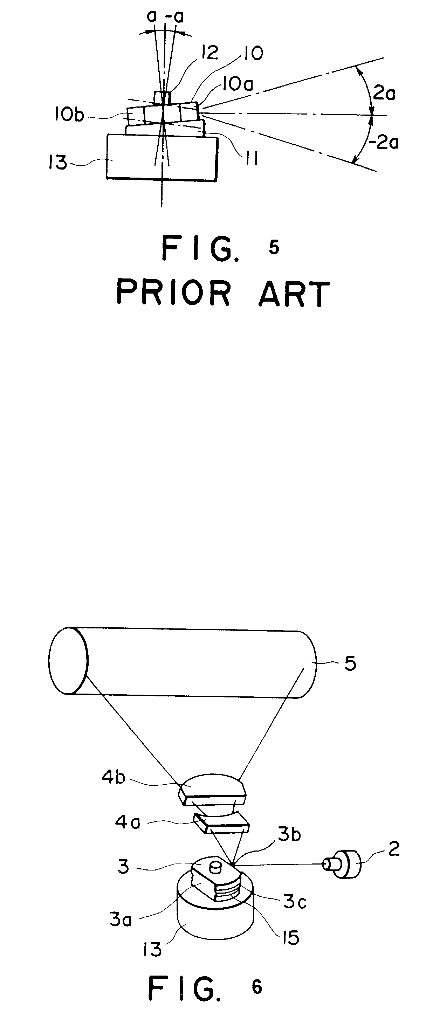

Referring to Figure 5 which shows an example of prior art corresponding to the preamble of claim 1, a rotational hexagon mirror having six reflecting surfaces is rotating to scanningly deflect the beam. The mirror surfaces are slightly tilted, so that the pitches of the scanning lines are not uniform on an unshown photosensitive drum surface on which the beam is incident and which is rotated at a constant speed. The polygon mirror 10 is mounted to the motor flange 11, and the motor rotational shaft 12 and the flange 11 supporting the polygon mirror 10 are slightly oblique to form an angle a seconds due to a mechanical inaccuracy. The beam deflected by the surface 10a is tilted by 2a seconds. As to the adjacent reflecting surface, the tilting is different. When the motor 13 rotates the mirror 10 through 180 degrees, wherein the opposite reflecting surface 10b receives the beam, the tilting of this mirror surface is -a seconds in the direction opposite to that of the first surface. As a result, the tilting of the reflected beam is -2a seconds. Therefore, when the motor rotates the mirror 10 through one full turn, the reflected beam varies within ±2a seconds. Due to this, the pitches between scanning lines are varied.

In addition, when six reflecting surfaces are formed, it is difficult to make the angles of the whole reflecting surfaces with respect to a beam all the same. Therefore, even if the polygonal mirror 10 were mounted without tilting, it would be difficult to present the non-uniform pitch.

For those reasons, it is usual to employ an expensive tilt correcting optical system.

Moreover, DE-A-30 47 813 discloses a laser scanning apparatus having a rotational scanning member comprising a single mirror element passing through the rotational axis of the rotational scanning member.

In addition, GB-A-847 267 discloses high speed rotational mirrors for use in high speed cameras. The mirrors comprise two effective surfaces for reflecting and one or more ineffective surfaces.

Furthermore, US-A-3 818 444 discloses an optical code reader using a rotational scanning member having reflective surface segments alternating with non-reflective or blackened surface segments.

### SUMMARY OF THE INVENTION

Accordingly, it is a principal object of the present invention to provide a beam deflecting device which has the advantages of the polygonal mirror, and which is substantially free from influence of tilting.

It is another object of the present invention to provide a beam deflector in which when a light beam is incident on such a surface of a mirror as is not used for the beam deflection, the scanning is not adversely affected.

It is a further object of the present invention to provide a beam deflecting device which is suitably usable with a laser beam printer, by which the pitches of the scanning lines are uniform.

It is a yet further object of the present invention to provide a small-size deflector. According to an embodiment, only one or two reflecting surfaces are used for scanningly deflecting a beam, so that the size of the deflector can has reduced.

According to the present invention, the above objects are achieved by a rotational scanning member for use in a laser scanning apparatus, wherein a laser beam generated from a light source is reflected by the rotational scanning member and scanned onto an object surface, said rotational scanning member having one or more effective surfaces capable of reflecting the laser beam onto said object surface, wherein said scanning member has one or more surfaces of circular shape each of which contains at least one circumferential groove for reflecting the laser beam so that these surfaces are ineffective for scanning.

These and other objects, features and advantages of the present invention will become more apparent upon a consideration of the following description of the preferred embodiments of the present invention taken in conjunction with the accompanying drawings.

### BRIEF DESCRIPTION OF THE DRAWINGS

Figures 1 and 3 are side and perspective views of a beam deflector according to an explanatory example which is not according to the present invention.

Figure 2 is a perspective view of a beam deflector according to an explanatory example which is not according to the present invention.

Figures 4A and 4B are a top plan view and a schematic sectional view of a laser beam printer according to an embodiment of the present invention.

Figure 5 is a sectional view of a conventional beam deflector.

Figure 6 shows a laser beam printer according to another embodiment of the present invention.

Figures 7, 8 and 9 are sectional views according to other embodiments of the present invention.

### DESCRIPTION OF THE PREFERRED EMBODIMENTS

Referring to the Figures, preferred embodiments of the present invention will be described wherein the same reference numerals are assigned to the corresponding elements.

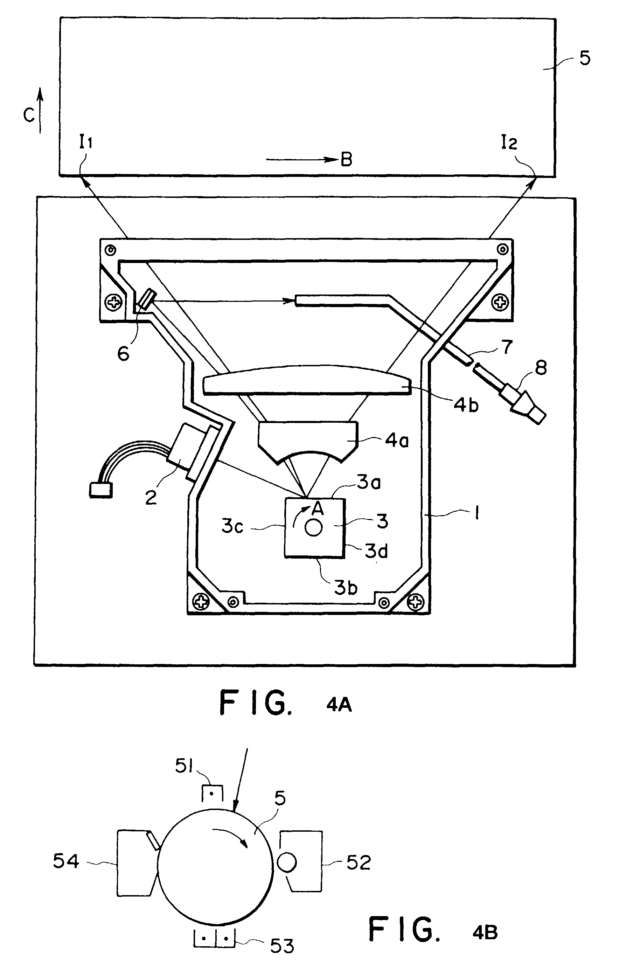

Referring first to Figure 4A, there is shown a laser beam printer incorporating a light deflecting device according to an embodiment of the present invention.

The laser beam printer comprises a molded housing 1, a semiconductor laser source 2 mounted on a side wall of the housing 1, a rotational mirror 3 rotatable in a direction indicated by an arrow A in the housing 1, an f-θ lens system 4a and 4b a mirror 6 and a fiber 7.

A laser beam is emitted from the laser source 2 and is modulated in accordance with information to be recorded, and is scanningly deflected by rotation of the rotational mirror 3 in a main scanning direction (direction B). Also, it is scanned in a subordinate scanning direction (direction C), that is, the direction of movement of the photosensitive member 5.

A light sensor 8 receives the laser beam at a predetermined position outside an effective scanning range (between I1 and I2) of the photosensitive member. The light sensor 8 produces a synchronizing signal, in response to which the start of modulation of the laser beam starts.

As shown in Figure 4B around the photosensitive drum 5, there are disposed process means such as a charger 51, a developing device 52, a transfer device 53, a cleaning device 54 and the like.

In this embodiment, no particular tilt correcting optical system is used, such as a cylindrical lens or the like.

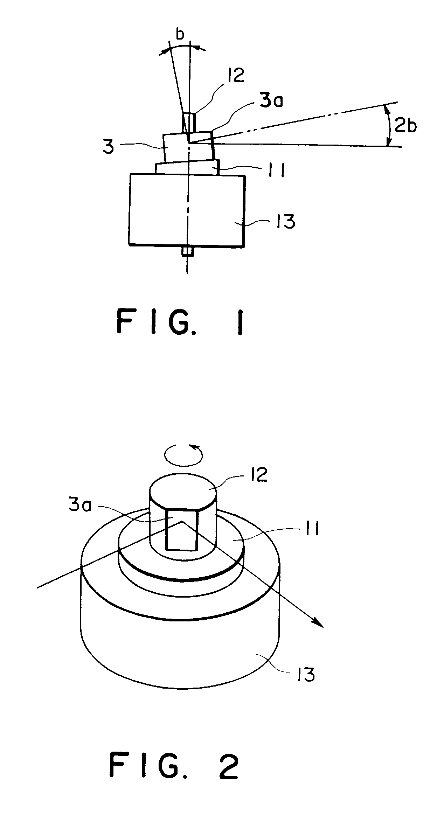

Referring to Figures 1 and 2 showing an explanatory example which is not according to the present invention, the rotational mirror 3 has the advantage of a rotational polygon mirror, that is, it includes a cylindrical or columner metal having a substantial thickness, more particularly, it is a circular rod of non iron metal, a part of the peripheral of which 3a is machined to a flat surface, which constitute a reflecting surface. By this, a large moment of inertia can be provided to stabilize the rotation, which is suitable for a high speed rotation. Assuming that the mirror surface is inclined by b seconds with respect to a rotational axis of the motor 13, the reflected beam is inclined by 2b for the reason described hereinbefore. However, the rotor has only one mirror surface, so when the beam is reflected by the mirror surface after one full turn of the rotor, the inclination of the reflected beam is also 2b.

This is particularly effective when the photosensitive member is line-scanned. This is because it has only one reflecting surface, so that the tilting, if any, is the same whenever the photosensitive member is scanned, whereby the pitches of the scanning lines are constant. Therefore, the image deterioration by the tilting can be avoided without the necessity of using a special tilt correction optical system. Thus, the size of the device and the cost thereof can be reduced. In this example, during the time when the beam is incident on the non-mirror surface of the rotor, the beam may be emitted. However, it is preferable to stop the beam because there is a liability that a beam reflected thereby reaches the photosensitive member to unintentionally expose it.

Since it has one mirror surface, the rotational mirror is preferably rotated at a high speed, and therefore, the rotational mirror is not made of glass but made of a metal, particularly a non-iron metal.

Further, when the rotor is formed by partly cutting a circular rod or column on a thick circular disk, rotational balance is slightly disturbed. Therefore, it is preferable that a weight is provided to the cut-away side, or the opposite side is also cut-away to provide a balance.

As an alternative, a rotational polygonal mirror may be used, but wherein only one predetermined surface is used for scanning the beam by controlling the laser emitting timing.

At this time, the laser emission timing is controlled so as to provide a synchronization signal at intervals which are equal to the time required for the polygonal mirror rotates through one full turn. In response to the synchronization signal, an image signal is produced. Another alternative is that the sensor 8 for detecting the aforementioned synchronization signal receives the laser beam reflected by the respective polygonal mirror surfaces, and the number of incident beams are counted, wherein an image signal is produced when the same reflecting surface comes in the position. Then, the possibility of using the other surfaces can be avoided.

To provide the rotational mirror shown in Figure 1, wherein one cut-away surface is used as a reflecting surface, it is possible to machine the rotational axis itself as shown in Figure 2. By employing this structure, the number of parts can be reduced, and the accuracy can be increased.

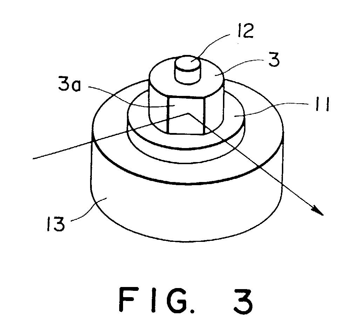

As shown in Figure 3 which is also an explanatory example, a part of a circular column can be cut-away to provide a flat mirror surface. In consideration of the rotational balance, it is possible that it is cut at two parallel surfaces, and one of the cut-away portion is formed into a mirror surface, since then, the rotational balance is improved.

As described in the foregoing, if only one surface is used, the tilting of the reflecting surfaces as in a polygonal mirror wherein the whole polygonal surfaces are used, is not a problem, and the accuracy of mounting the mirror to the motor flange becomes non-influential. In this case, the non-uniform pitch can be prevented without use of the tilt correcting optical system, only if unintentional deflection by vibration is removed.

As described hereinbefore, in the explanatory examples the portion of the rotor not used for the scanning may have any shape. however, since the rotation of the mirror is high for high speed scanning deflection, a noise is produced by wind pressure, it is preferable that such a portion is circular, further preferably, a circular having a center coincident with the rotational center of the mirror. The surface used for the beam scan may not be a completely flat surface, but may be a reflecting surface having an f-θ correction, by suitably and slightly curved. Therefore, the surface is a substantially flat surface.

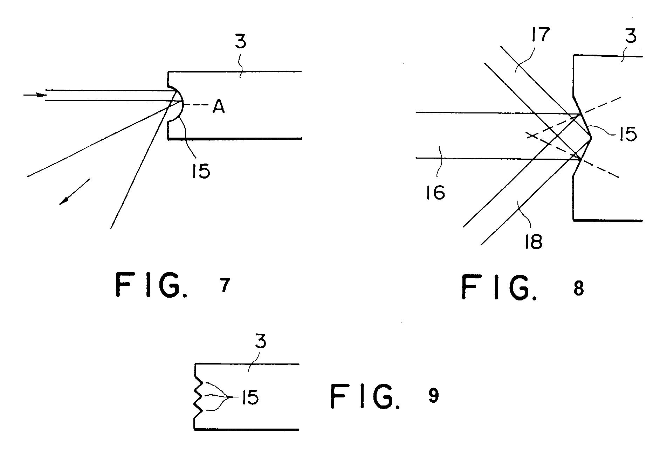

Referring to Figure 6, there is shown a part of a laser beam printer incorporating one of the embodiments, wherein circumferential grooves 15 are formed in the portions receiving the light beam in the non-use surfaces 3c and 3d which are not mirror surfaces. Each of the grooves 15 has a cross-section in a circular form or V form, preferably.

As shown in Figure 7, by forming it into a partial circle, the beam can be expanded to reduce the energy per unit area. However, it is possible that when the beam is incident on the exact center A of the circle, a slight amount of reflected light reaches a photosensitive member. Although the amount is so small that the photosensitive member is effectively exposed, it might be a problem if the sensitivity of the photosensitive member is very high or if the intensity of the beam is very strong.

Referring to Figure 8, there is shown a further preferable embodiment having a V-shaped groove.

The beam 16 incident on the inclined surface portion of the V-shaped groove is reflected to outside the scanning position, and the beam incident on the center of the V-shaped groove is divided into beams 17 and 18, which are both directed outside the scanning position.

Thus, by aligning the center of the beam with the center of the V-shaped groove, the beam reflected thereby can be directed to outside the photosensitive drum surface, and also, even if the position of incident beam onto the rotational mirror is slightly deviated, the beam reaches the inclined surface portion, so that the beam is reflected to a position different from the position to be scanned. The V-shape is preferably symmetrical, since then the depth of the groove can be minimized so that the groove extending to the longitudinal ends, i.e., adjacent reflecting or deflecting surfaces where the groove reduces the effective reflecting surfaces by its cross-section, reduces only a minimum amount of the effective reflecting area in the adjacent reflecting surfaces. However, the V-shape may be asymmetrical, for example, one side is inclined with respect to the rotational axis, while the other is perpendicular thereto. In this case, the arrangement is such that the beam is incident on the inclined side. This groove is less advantageous than the symmetric groove in that the effective reflecting surfaces are reduced by a larger amount. However, it is possible to design inconsideration of this point.

The sides of the V-shape may be curved, if the central edge is pointed.

If it is difficult to sharply point the bottom of the V-shape, an anti-reflection coating may be applied to the bottom.

In this embodiment, the grooves are preferably perpendicular to the rotational axis, since then the width and depth thereof may be made smaller.

It is preferable that the groove is formed in the middle between the top and bottom surfaces of the rotational mirror.

The non-use portions may be of flat surfaces, but more preferably, it is in the form of a part-circle concentric with the rotational axis. By doing so, the manufacturing is easy, and the air resistance during rotation can be minimized, whereby the noise is minimized, and the motor load is minimized.

The number of the grooves is not limited to one, but may be plural, as shown in Figure 9. By doing so, the depth of the groove can be reduced.

Also, it is preferable that an angle of the reflecting surface and an angle of the non-use surface, particularly, the angles of the flat surfaces 3a and 3b and the angles of the part-circular surfaces 3c and 3d with respect to the bottom surface of the rotational mirror are the same, particularly 90 degrees. By doing so, the accuracy of the angle of the rotational mirror with respect to a reference mounting surface can be easily achieved when the reflecting surfaces are formed into mirror surfaces.

The arrangement of the reflecting surfaces and non-use surfaces are not limited to those shown in Figure 6. Only one surface may be used, and three or more surfaces are used.

## Claims

1. A rotational scanning member (3) for use in a laser scanning apparatus, wherein a laser beam generated from a light source (2) is reflected by the rotational scanning member (3) and scanned onto an object surface (5), said rotational scanning member (3) having one or more effective surfaces capable of reflecting the laser beam onto said object surface,
**characterized in that**
said scanning member (3) has one or more surfaces (3c) of circular shape each of which contains at least one circumferential groove (15) for reflecting the laser beam so that these surfaces (3c) are ineffective for scanning.

2. A member according to claim 1, **characterized in that** a center of the circular shape is coaxial with a rotational axis of said scanning member (3).

3. A member according to claim 1 or 2, **characterized in that** the at least one circumferential groove (15) has a cross-section in a circular shape.

4. A member according to claim 1 or 2, **characterized in that** the at least one circumferential groove (15) has a cross-section in a V shape.

5. A member according to claim 4, **characterized in that** said V shape is symmetrical.

6. A member according to claim 4, **characterized in that** said V shape is asymmetrical.

7. A laser beam printer having a laser beam source (2), a photosensitive member (5) and a rotational scanning member (3) according to any of the preceding claims.

## Patentansprüche

1. Ein rotierendes Abtastelement (3) zur Verwendung in einer Laser-Abtastvorrichtung, in welcher ein von einer Lichtquelle (2) erzeugter Laserstrahl durch das rotierende Abtastelement (3) reflektiert und auf eine Objektfläche (5) abgetastet wird, wobei das genannte rotierende Abtastelement (3) eine oder mehrere wirksame Flächen besitzt, die imstande sind, den Laserstrahl auf die besagte Objektfläche zu reflektieren,
dadurch gekennzeichnet, daß
das genannte Abtastelement (3) eine oder mehrere Flächen (3c) von kreisförmiger Gestalt aufweist, von denen jede mindestens eine periphere Kehle (15), um den Laserstrahl zu reflektieren, enthält, so daß diese Flächen (3c) für ein Abtasten unwirksam sind.

2. Ein Element nach Anspruch 1, dadurch gekennzeichnet, daß ein Zentrum der kreisförmigen Gestalt koaxial mit einer Drehachse des genannten Abtastelements (3) ist.

3. Ein Element nach Anspruch 1 oder 2, dadurch gekennzeichnet, daß die wenigstens eine periphere Kehle (15) einen Querschnitt in einer kreisförmigen Gestalt hat.

4. Ein Element nach Anspruch 1 oder 2, dadurch gekennzeichnet, daß die mindestens eine periphere Kehle (15) einen Querschnitt in einer V-Gestalt hat.

5. Ein Element nach Anspruch 4, dadurch gekennzeichnet, daß die genannte V-Gestalt symmetrisch ist.

6. Ein Element nach Anspruch 4, dadurch gekennzeichnet, daß die genannte V-Gestalt asymmetrisch ist.

7. Ein Laserstrahldrucker, der eine Laserstrahlquelle (2), ein lichtempfindliches Bauteil (5) sowie ein rotierendes Abtastelement (3) nach einem der vorhergehenden Ansprüche besitzt.

## Revendications

1. Organe de balayage rotatif (3) destiné à être utilisé dans un appareil de balayage à laser, dans lequel un faisceau laser, produit par une source de lumière (2), est réfléchi par l'organe de balayage rotatif (3) et balayé sur une surface d'objet (5), ledit organe de balayage rotatif (3) ayant une ou plusieurs surfaces efficaces capables de réfléchir le faisceau laser sur ladite surface d'objet,
caractérisé en ce que
ledit organe de balayage (3) présente une ou plusieurs surfaces (3c) de forme circulaire, chacune d'entre elles contenant au moins une gorge circonférentielle (15) servant à réfléchir le faisceau laser de manière que ces surfaces (3c) soient inefficaces concernant le balayage.

2. Organe selon la revendication 1, caractérisé en ce que le centre de la forme circulaire est coaxial par rapport à l'axe de rotation dudit organe de balayage (3).

3. Organe selon la revendication 1 ou 2, caractérisé en ce que la au moins une gorge circonférentielle (15) présente une section transversale de forme circulaire.

4. Organe selon la revendication 1 ou 2, caractérisé en ce que la au moins une gorge circonférentielle (15) présente une section transversale en forme de V.

5. Organe selon la revendication 4, caractérisé en ce que ladite forme de V est symétrique.

6. Organe selon la revendication 4, caractérisé en ce que ladite forme de V est asymétrique.

7. Imprimante à faisceaux laser ayant une source de faisceaux laser (2), un organe photosensible (5) et un organe de balayage rotatif (3) selon l'une quelconque des revendications précédentes.
